# EUROPEAN PATENT SPECIFICATION

(11) **EP 3 182 541 B1**
(45) Date of publication and mention of the grant of the patent: **07.11.2018**
(21) Application number: 16202148.9
(22) Date of filing: 05.12.2016
(51) Int. Cl.: H02G 15/00

(54) **A CABLE CLAMP, FOR INSTANCE FOR LIGHTING DEVICES, CORRESPONDING DEVICE AND METHOD**
KABELKLEMME, ZUM BEISPIEL FÜR BELEUCHTUNGSVORRICHTUNGEN, ZUGEHÖRIGE VORRICHTUNG UND VERFAHREN
PINCE DE CÂBLE, PAR EXEMPLE POUR DES DISPOSITIFS D'ÉCLAIRAGE, DISPOSITIF CORRESPONDANT ET PROCÉDÉ

(30) Priority: 15.12.2015 IT UB20159219
(43) Date of publication of application: 21.06.2017
(73) Proprietor: OSRAM GmbH, 80807 München (DE); OSRAM S.P.A. - SOCIETA' RIUNITE OSRAM EDISON CLERICI, 20126 Milano (IT)
(72) Inventor: FAVRETTO, Antonio, I-31013 Codognè (Treviso) (IT); SAGLIOCCO, Alessio, I-30027 San Donà di Piave (Venezia) (IT); NASCIMBEN, Daniele, I-31057 Silea (Treviso) (IT); CACCHIONE, Fabrizio, I-30031 Dolo (Venezia) (IT)
(74) Representative: Bosotti, Luciano

(56) References cited:
- EP-A2- 1 978 615
- WO-A1-2015/140031
- DE-U1- 20 004 983
- GB-A- 2 359 112
- US-A- 3 925 851

## Description

### Technical Field

The description relates to cable clamps.

One or more embodiments are adapted to be employed in the field of lighting devices.

### Technological Background

Luminaires may envisage the use of cable clamps adapted to perform a plural protection function, such as against sharp edges, twisting, etc.

Mounting such clamps may require the use of specific tools (e.g. pliers having a particular nose configuration).

The mounting operation may have the drawback of being substantially irreversible: for example, once the cable has been fixed by the clamp, it may be difficult or even impossible to adjust the length thereof.

Generally speaking, the mounting operations of such clamps may therefore be long, costly, complex (and therefore also tiring) and often not suitable for automatic processing.

Despite the extensive innovation research carried out in the field, which is disclosed e.g. in documents such as US 5 675 128 A, EP 1 137 140 B1, WO 03/067715A1, DE 20 2013 101 929 U1 or AT 13 591 U1, the need is still felt of improved solutions.

Document US 3 925 851 A discloses a plastic hose clamp embodying in combination an open-ended hose-surrounding band and a clamping assembly integral therewith, the assembly including first and second interlocking parts including jaws interlocking by way of triangular teeth.

More specifically, the invention relates to a cable clamp according to the preamble of claim 1, which is known, e.g., from WO 2015/140031 A1.

Document EP 1 978 615 A2 discloses a power cord fixing structure wherein a power cord is locked pulled in a right direction across a rail.

Documents GB 2 359 112 A and DE 200 04 983 U1 are also of interest for the invention.

### Object and Summary

One or more embodiment aim at contributing to satisfying such need.

According to one or more embodiments, said object may be achieved thanks to a cable clamp having the features set forth in the claim 1 that follows.

One or more embodiments may also concern a corresponding device, as well as a corresponding method.

The claims are an integral part of the technical teaching provided herein in relation to the embodiments.

One or more embodiments may envisage, for the implementation of a clamp, the use of a plastic material which may exhibit two properties:
- elasticity, enabling the deformation of at least part of the clamp (collar portion) without breaking, and
- the ability to achieve a certain friction coefficient while throttling the plastic material onto the cable sheath.

One or more embodiments enable the achievement of one or more of the following advantages:
- reduction of the number of components,
- reduction of the time required for mounting,
- possibility of mounting without specific tools,
- simplification of the mounting operation and of the work required,
- possibility of using shorter cables (practically on the basis of the application requirements), with a consequent cost reduction,
- possibility, thanks to the simplification of the mounting operation, of automatic processing,
- possibility of achieving a protection, e.g. an IP grade protection, against the penetration of external agents,
- possibility of a multiple use.

### Brief Description of the Figures

One or more embodiments will now be described, by way of non-limiting example only, with reference to the annexed Figures, wherein:

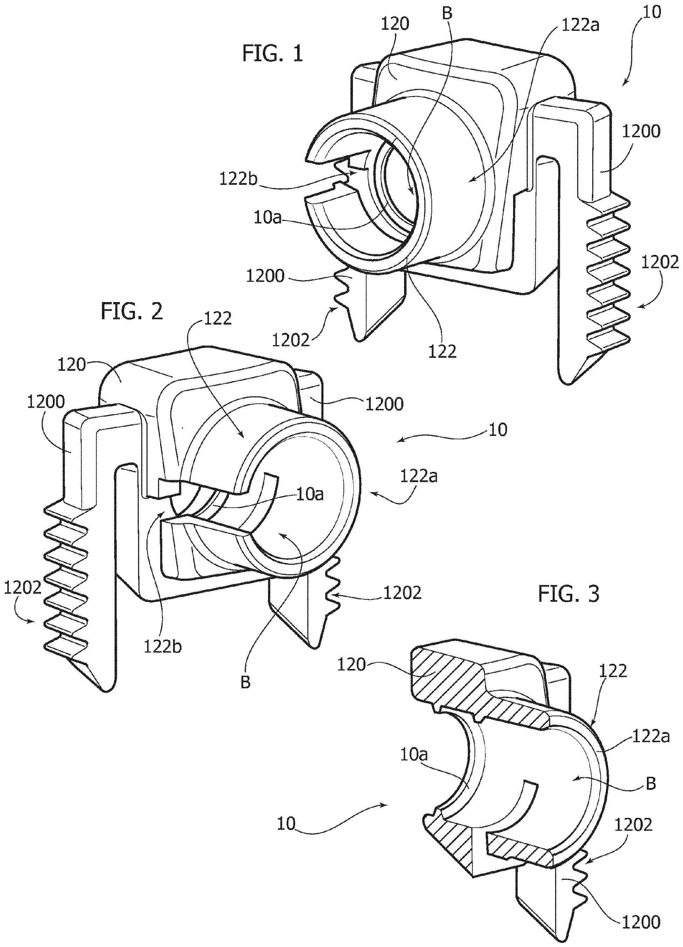

- Figures 1 to 3 are perspective views of embodiments, Figure 3 being a cross section along an approximately middle longitudinal plane,
- Figures 4 to 6 schematically show possible use criteria of one or more embodiments, the clamp of Figure 6 being viewed along an approximately middle cross-section plane,
- Figures 7 to 9, each comprising two portions respectively denoted as a) and b), show possible implementation steps of one or more embodiments, and
- Figure 10, again comprising two portions respectively denoted as a) and b), shows in further detail one or more embodiments in conditions approximately corresponding to those shown in Figure 9.

It will be appreciated that, for clarity of illustration, the various Figures may not be drawn to the same scale.

### Detailed Description

In the following description, numerous specific details are given to provide a thorough understanding of various examples of embodiments. The embodiments may be obtained without one or several of the specific details, or with other methods, components, materials, etc. In other instances, well-known structures, materials or operations are not shown or described in detail to avoid obscuring various aspects of the embodiments.

Reference throughout this specification to "one embodiment" or "an embodiment" means that a particular feature, structure, or characteristic described in connection with the embodiment is included in at least one embodiment. Thus, the possible appearances of the phrases "in one embodiment" or "in an embodiment" in various places throughout this specification are not necessarily all referring to the same embodiment. Furthermore, particular features, structures, or characteristics may be combined in any suitable manner in one or more embodiments.

The headings provided herein are for convenience only, and therefore do not interpret the extent of protection or the scope of the embodiments.

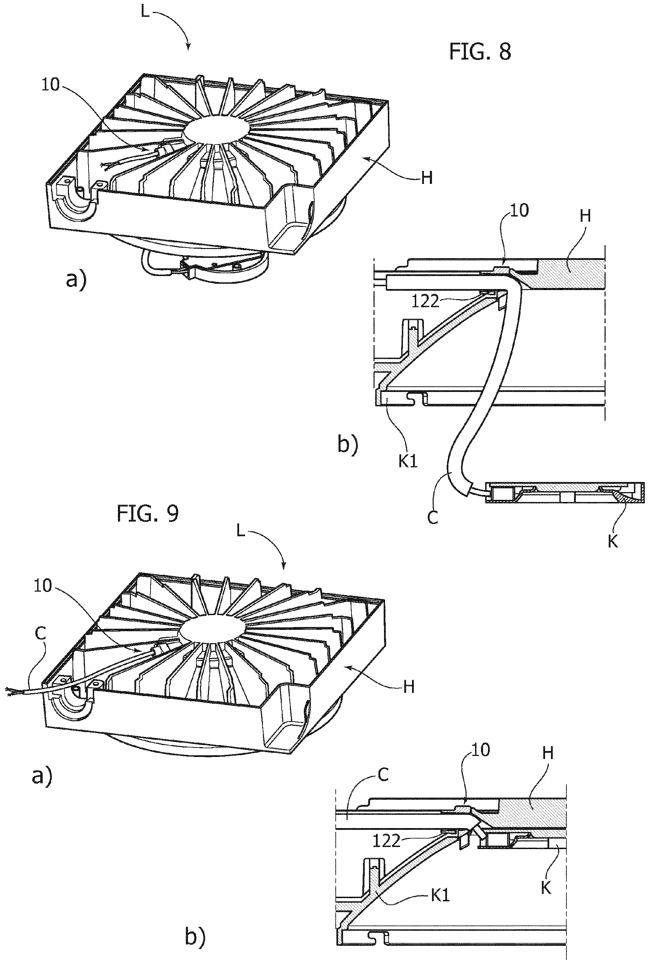

In the Figures, reference 10 denotes a cable clamp e.g. for electrical cables, which may be used e.g. for a luminaire L (see e.g. Figures 8 and 9) for passing an electrical cable C towards at least one lighting source K mounted in a housing H.

In one or more embodiments source K, which may have a reflector K1 associated thereto (e.g. a cover-shaped reflector), may be an electrically-powered solid-state light radiation source, such as a LED source.

In accordance with the invention housing H may be comprised of a moulded plastic or metal material, such as a lightweight metal as aluminium.

In accordance with the invention, clamp 10 includes a tubular member, adapted to be made e.g. of one piece of a moulded plastic material, with the optional insertion of a sealing ring 10a (e.g. of an elastomeric material such as rubber) optionally adapted to be co-moulded with the body of clamp 10.

Whatever the specific implementation details, in one or more embodiments clamp 10 may be considered as a member having a generally tubular configuration, being traversed by an opening B.

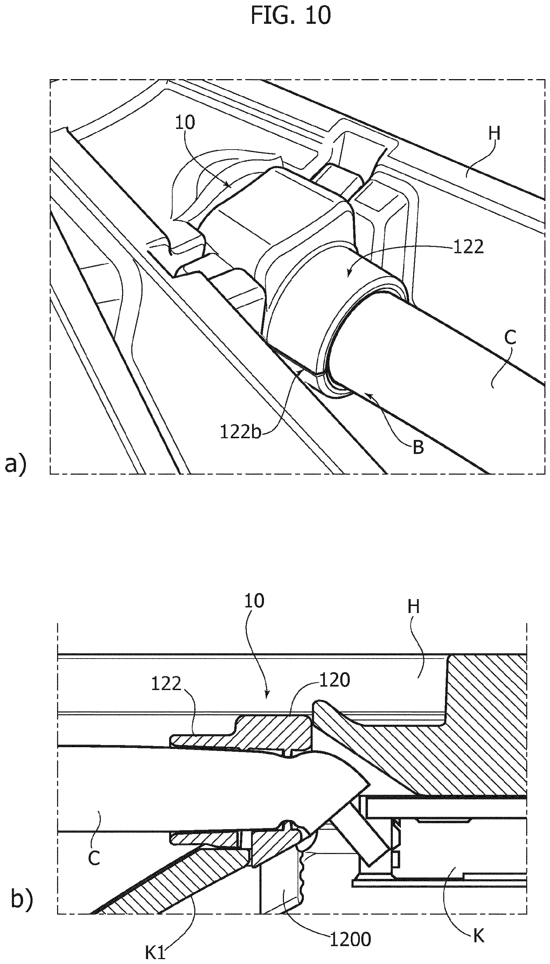

Opening B is adapted to define a passageway through which cable C may extend (see e.g. Figure 10 as a general reference).

In one or more embodiments, a clamp 10 as exemplified herein may include:
- a body portion 120, adapted to have a so-to-say prismatic, cube-like shape, and
- a collar portion 122, arranged sidewise of body portion 120, said collar portion 122 being contractile, e.g. elastically, so as to be able to throttle cable C adapted to extend both through body portion 120 and collar portion 122.

In one or more embodiments, body portion 120, which may be considered as generally rigid (of course while taking into account the intrinsic deformability of the plastic material which may constitute said portion), may perform the function of enabling mounting clamp 10 onto housing H of lighting device L.

To this aim, body portion 120 may carry resilient (e.g. elastic) anchoring formations 1200 (e.g. of one piece).

In accordance with the invention two such anchoring formations 1200 may be provided, arranged on opposite sides with reference to body portion 120.

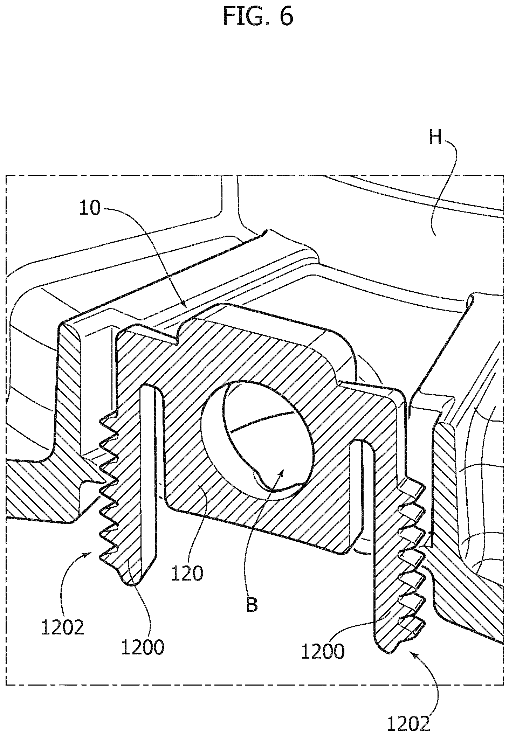

In accordance with the invention as better visible in Figure 6, wherein body portion 120 is shown in cross-section, divided into two parts along a crosswise plane, anchoring formations 1200 may have the form of e.g. L-shaped flaps, a proximal branch whereof protrudes radially from portion 120 and a distal branch extends along the side of portion 120 from which formation 1200 extends.

In one or more embodiments, anchoring formations 1200 may have (e.g. on their external side, although this implementation is not mandatory) a sculpturing 1202 such as a toothing which enables, e.g. in cooperation with ribs projecting from housing H (see e.g. Figure 6 again), to selectively adjust the mounting position of clamp 10 in housing H.

In one or more embodiments, collar portion 122 may include a plurality of (tile-shaped) segments, so as to originate a radially contractile structure.

In one or more embodiments as exemplified herein, the collar portion may comprise two tile-shaped, i.e. C-shaped, segments, which are mutually connected (through what may be ideally considered a flexible hinge, due to the material elasticity) at an end 122a. At the opposed end, both segments may define a separation gap 122b therebetween, having a maximum width at rest (i.e. without radial contraction stresses applied to collar portion 122) and adapted to achieve a lower (virtually zero) value when collar portion 122 is subjected to a radial contraction force, e.g. according to ways better detailed in the following.

In one or more embodiments, the size of clamp 10 may be chosen according to the size (diameter) of cable C, so that:
- when collar portion 122 is at rest (i.e. it is not strained in the contraction direction), cable C may be slidden lengthwise through opening B, being only braked by the friction of annular gasket 10a (which, in one or more embodiments, may be located at body portion 120), and
- when collar portion 122 is radially contracted, cable C may be firmly retained within clamp 10 (which in turn may be mounted onto housing H) so as to withstand tearing, e.g. in compliance with safety regulations.

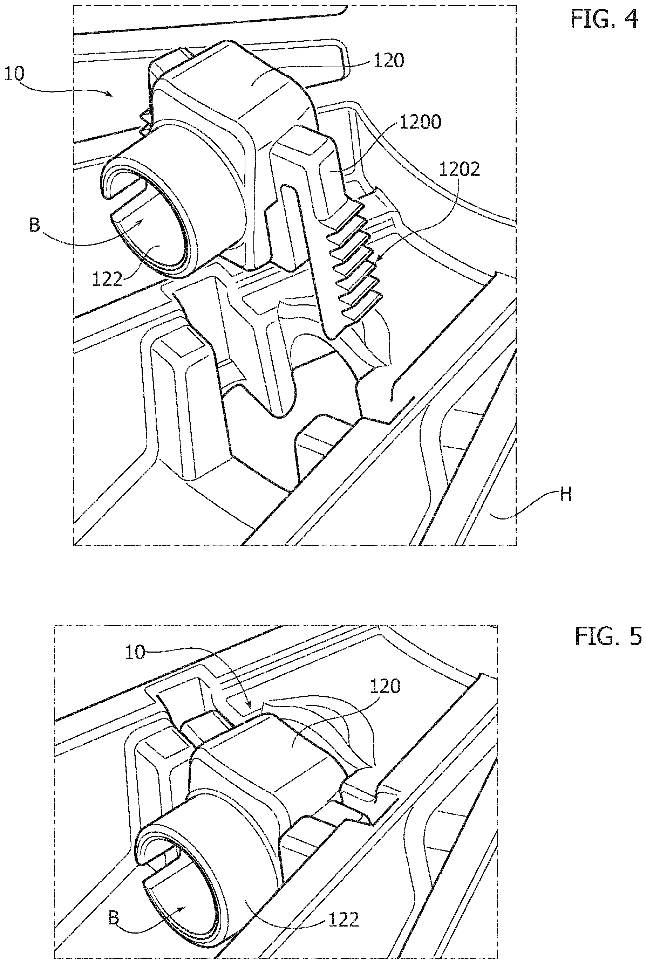

The sequence of Figures 4 to 6 exemplifies possible mounting features of clamp 10 onto housing H of lighting device L (which may have different shapes and structures); thanks to the presence of anchoring formations 1200, the body portion 120 of clamp 10 is adapted to be inserted, e.g. by friction fit, an optional blocking action being performed via toothing 1202, into a receiving seat provided in housing H.

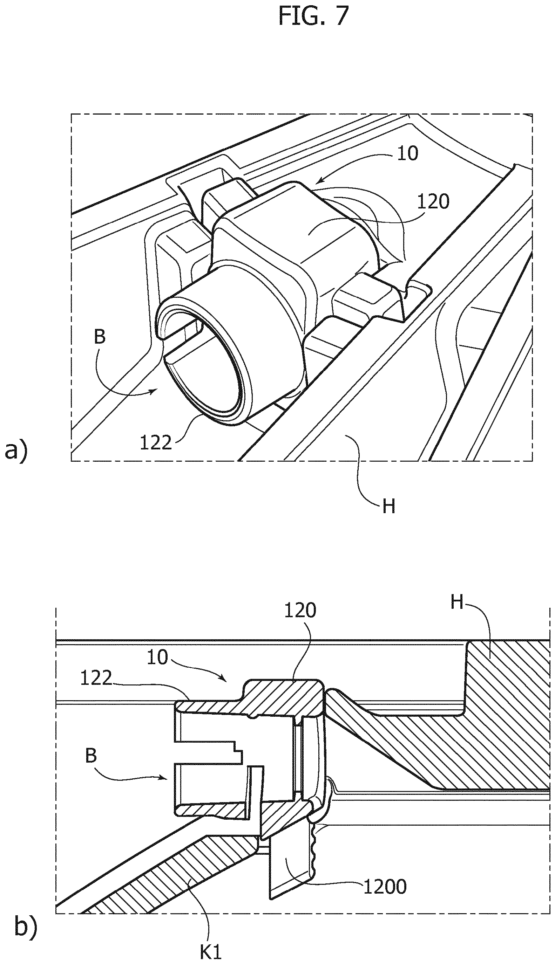

Figure 7 exemplifies the possibility, in one or more embodiments, of mounting clamp 10 into housing H when "at rest", i.e. with the collar portion 122 in a flared and radially non-contracted position.

In such conditions, cable C may be passed through cable 10 (see e.g. Figure 8) by sliding it within housing H, e.g. according to the connection and mounting needs of lighting source K. For example, cable C may be advanced within housing H with a certain "excess", i.e. so that a sufficiently long cable C may be obtained to enable e.g. the connection to source K without housing H being an obstacle to the related operations.

Subsequently, as exemplified in the sequence of Figures 9 and 10), cable C may be drawn back towards the outside of housing H, so as to reduce the length of the portion extending within housing H towards lighting source K.

At this stage, clamp 10 (and specifically collar portion 122) may be brought to a radially contracted position (e.g. by reducing gap 122b, optionally to zero - see in this regard portion a) of Figure 10), in such conditions that cable C is throttled in clamp 10 and therefore is secured against any tearing.

In one or more embodiments (as exemplified e.g. in Figures 9 and 10) said radial contraction of collar portion 122 may derive from the completion of the mounting operation of lighting device L.

For example, Figures 9 and 10 refer to the possibility of associating a reflector K1 (e.g. a reflective dome) to light radiation source K.

In the initial mounting steps, cable C may be inserted into clamp 10 when reflector K1 has not been applied onto housing H yet, or when the reflector, albeit already present, is not completely throttled onto housing H, so that it does not press clamp 10 (see e.g. Figure 8).

Subsequently (see e.g. Figures 9 and 10) reflector K1 may be mounted and/or clamped onto housing H (e.g. via screws or simply through a bayonet fitting) so that it presses collar portion 122, therefore throttling it and bringing about the clamping of cable C within clamp 10 itself.

Without prejudice to the basic principles, the implementation details and the embodiments may vary, even appreciably, with respect to what has been described herein by way of non-limiting example only, without departing from the extent of protection.

The extent of protection is defined by the annexed claims.

## Claims

1. A cable clamp (10) including a tubular member with an opening (B) providing a passageway for a cable (C) through said tubular member, wherein the tubular member includes:
- a body portion (120) provided with anchoring formations (1200), and
- a collar portion (122) arranged sidewise of said body portion (120), the collar portion (122) contractile to clamp a cable (C) extending through said passageway (B),
wherein the tubular member is made of one piece of a moulded material,
**characterized in that**:
- said body portion (120) includes opposite sides having L-shaped anchoring formations (1200) extending therefrom, wherein the body portion (120) is insertable into a receiving seat provided in a housing (H), and
- said collar portion (122) includes two complementary segments mutually coupled at one end (122a) and having a contractile gap (122b) therebetween at the opposed end.

2. The clamp of claim 1, wherein said anchoring formations (1200) include anchoring sculpturing (1202).

3. The clamp of any of the previous claims, wherein said tubular member (120, 122) includes plastic material.

4. The clamp of any of the previous claims, including a seal formation (10a) for cooperation with a cable (C) extending through said passageway (B).

5. The clamp of claim 4, wherein said seal formation (10a) is provided at said body portion (120).

6. A lighting device (L) including:
- a housing (H) for mounting at least one electrically-powered lighting source (K), and
- a clamp (10) according to any of claims 1 to 5 arranged in said housing (H) for a cable for powering said at least one lighting source (K) to extend through said clamp (10).

7. The lighting device of claim 6, wherein said housing (H) includes at least one portion (K1) configured for pressing said collar portion (122) by maintaining it in a contracted condition to clamp said cable (C) extending through said clamp (10).

8. The lighting device of claim 7, wherein said at least one portion is a light reflector for said at least one lighting source (K),

9. A method of mounting a lighting device (L), the method including providing a housing (H) per mounting at least one electrically-powered lighting source (K) and arranging in said housing a clamp (10) according to any of claims 1 to 5, wherein said housing (H) includes at least one portion (K1) configured for pressing said collar portion (122) by maintaining it in a contracted condition to clamp said cable (C) extending through said clamp (10), the method including:
- passing through said clamp (10) a cable (C) for powering said at least one lighting source (K), and
- pressing said collar portion (122) by means of said at least one portion (K1) of the casing (H) by causing it to contract and clamp said cable (C) extending through said clamp (10).

10. The method of claim 9, mounting a lighting device (L), wherein said at least one portion (K1) is a light reflector for said at least one lighting source (K) .

## Patentansprüche

1. Kabelklemme (10), die ein rohrförmiges Element mit einer Öffnung (B) beinhaltet, und einen Durchgangsweg für ein Kabel (C) durch das rohrförmige Element bereitstellt, wobei das rohrförmige Element beinhaltet:
- einen Körperabschnitt (120), der mit Verankerungsformationen (1200) bereitgestellt ist, und
- einen Kragenabschnitt (122) der seitlich des Körperabschnitts (120) angeordnet ist, wobei der Kragenabschnitt (122) zusammenziehbar ist, um ein Kabel (C), welches sich durch den Durchgangsweg (B) hindurch erstreckt, zu klemmen,
wobei das rohrförmige Element aus einem Stück eines geformten Materials hergestellt ist,
**dadurch gekennzeichnet, dass**:
- der Körperabschnitt (120) gegenüberliegende Seiten beinhaltet, die L-förmige Verankerungsvorrichtungen (1200) aufweisen, welche sich davon erstrecken, wobei der Körperabschnitt (120) in einen Aufnahmesitz einfügbar ist, welcher in einem Gehäuse (H) bereitgestellt ist, und
- der Kragenabschnitt (122) zwei komplementäre Segmente beinhaltet, die gegenseitig an einem Ende (122a) gekoppelt sind, und eine zusammenziehbare Lücke (122b) dazwischen an dem gegenüberliegenden Ende aufweist.

2. Klemme nach Anspruch 1, wobei die Verankerungsformationen (1200) eine Verankerungsmodellierung (1202) beinhalten.

3. Klemme nach irgendeinem der vorhergehenden Ansprüche, wobei das rohrförmige Element (120, 122) ein Kunststoffmaterial beinhaltet.

4. Klemme nach irgendeinem der vorhergehenden Ansprüche, einschließlich einer Versiegelungsformation (10a), um mit einem Kabel (C), welches sich durch den Durchgangsweg (B) erstreckt, zusammenzuwirken.

5. Klemme nach Anspruch 4, wobei die Versiegelungsformation (10a) an dem Körperabschnitt (120) bereitgestellt ist.

6. Beleuchtungsvorrichtung (L), beinhaltend:
- ein Gehäuse (H), um zumindest eine elektrisch betriebene Beleuchtungsquelle (K) zu montieren, und
- eine Klemme (10) gemäß irgendeinem der Ansprüche 1 bis 5, die in dem Gehäuse (H) angeordnet ist, für ein Kabel, welches sich durch die Klemme erstreckt, um die zumindest eine Beleuchtungsquelle (K) mit Strom zu versorgen.

7. Beleuchtungsvorrichtung nach Anspruch 6, wobei das Gehäuse (H) zumindest einen Abschnitt (K1) beinhaltet, der konfiguriert ist, um den Kragenabschnitt (122) zu drücken, indem er in einem kontrahierten Zustand gehalten wird, um das Kabel (C), welches sich durch die Klemme (10) hindurch erstreckt, zu klemmen.

8. Beleuchtungsvorrichtung nach Anspruch 7, wobei der zumindest eine Abschnitt ein Lichtreflektor für die zumindest eine Beleuchtungsvorrichtung (K) ist.

9. Verfahren zum Montieren einer Beleuchtungsvorrichtung (L), wobei das Verfahren ein Bereitstellen eines Gehäuses (H) beinhaltet zum Montieren von zumindest einer elektrisch betriebenen Beleuchtungsquelle (K) und zum Anordnen einer Klemme (10), in dem Gehäuse, gemäß irgendeinem der Ansprüche 1 bis 5, wobei das Gehäuse (H) zumindest einen Abschnitt (K1) beinhaltet, der konfiguriert ist, um den Kragenabschnitt (122) zu drücken, indem er in einem kontrahierten Zustand gehalten wird, um das Kabel (C), welches sich durch die Klemme (10) hindurch erstreckt, zu klemmen, wobei das Verfahren beinhaltet:
Hindurchführen, durch die Klemme (10), eines Kabels (C), um die zumindest eine Beleuchtungsquelle (K) mit Strom zu versorgen, und
Drücken des Kragenabschnitts (122) mittels des zumindest einen Abschnitts (K1) des Gehäuses (H), indem er zum Zusammenziehen und zum Klemmen des Kabels (C) veranlasst wird, welches sich durch die Klemme (10) erstreckt.

10. Verfahren nach Anspruch 9, einschließlich eines Montierens einer Beleuchtungsvorrichtung (L), wobei der zumindest eine Abschnitt (K1) ein Lichtreflektor für die zumindest eine Beleuchtungsvorrichtung (K) ist.

## Revendications

1. Un serre-câble (10) comprenant un élément tubulaire avec une ouverture (B) fournissant un passage pour un câble (C) à travers ledit élément tubulaire, l'élément tubulaire comprenant :
- une partie de corps (120) munie de structures d'ancrage (1200), et
- une partie de collier (122) disposée sur le côté de ladite partie de corps (120), la partie de collier (122) étant contractile pour serrer un câble (C) s'étendant à travers ledit passage (B),
dans lequel l'élément tubulaire est réalisé d'une seule pièce en un matériau moulé,
**caractérisé en ce que** :
- ladite partie de corps (120) comprend des côtés opposés d'où s'étendent des structures d'ancrage en forme de L (1200), la partie de corps (120) étant insérable dans un siège récepteur prévu dans un boîtier (H), et
- ladite partie de collier (122) comprend deux segments supplémentaires couplés mutuellement à une extrémité (122a) et ayant un interstice contractile (122b) à l'extrémité opposée.

2. Le serre-câble selon la revendication 1, dans lequel lesdites structures d'ancrage (1200) incluent des sculptures d'ancrage (1202).

3. Le serre-câble selon l'une des revendications précédentes, dans lequel ledit élément tubulaire (120, 122) inclut de la matière plastique.

4. Le serre-câble selon l'une des revendications précédentes, incluant une structure de joint (10a) pour coopérer avec un câble (C) s'étendant à travers ledit passage (B).

5. Le serre-câble selon la revendication 4, dans lequel la structure de joint (10a) est prévue au niveau de ladite partie de corps (120).

6. Un dispositif d'éclairage (L) comprenant :
- un boîtier (H) pour monter au moins une source lumineuse à alimentation électrique (K), et
- un serre-câble (10) selon l'une des revendications 1 à 5 disposé dans ledit boîtier (H) pour qu'un câble alimentant ladite au moins une source lumineuse (K) s'étende à travers ledit serre-câble (10).

7. Le dispositif d'éclairage selon la revendication 6, dans lequel ledit boîtier (H) comprend au moins une partie (K1) conçue pour presser ladite partie de collier (122) en la maintenant dans un état contracté pour serrer ledit câble (C) s'étendant à travers ledit serre-câble (10).

8. Le dispositif d'éclairage selon la revendication 7, dans lequel ladite au moins une partie est un réflecteur de lumière pour ladite au moins une source lumineuse (K),

9. Un procédé de montage d'un dispositif d'éclairage (L), le procédé consistant à fournir un boîtier (H) pour monter au moins une source lumineuse à alimentation électrique (K) et à disposer dans ledit boîtier un serre-câble (10) selon l'une des revendications 1 à 5, ledit boîtier (H) comprenant au moins une partie (K1) conçue pour presser ladite partie de collier (122) en la maintenant dans un état contracté pour serrer ledit câble (C) s'étendant à travers ledit serre-câble (10), le procédé consistant à :
- passer à travers ledit serre-câble (10) un câble (C) pour alimenter ladite au moins une source lumineuse (K), et
- presser ladite partie de collier (122) au moyen de ladite au moins une portion (K1) du boîtier (H) en la faisant se contracter et serrer ledit câble (C) s'étendant à travers ledit serre-câble (10).

10. Le procédé selon la revendication 9, de montage d'un dispositif d'éclairage (L), dans lequel ladite au moins une partie (K1) est un réflecteur de lumière pour ladite au moins une source lumineuse (K).
